# FASCICULE DE BREVET EUROPEEN

(11) **EP 3 038 508 B1**
(45) Date de publication et mention de la délivrance du brevet: **06.03.2019**
(21) Numéro de dépôt: 14786974.7
(22) Date de dépôt: 21.08.2014
(51) Int. Cl.: A47J 43/07, A47J 43/08, F16D 1/10

(54) **APPAREIL ELECTROMÉNAGER DE PRÉPARATION CULINAIRE COMPORTANT UN OUTIL DE TRAVAIL VENANT S'ENGAGER DE MANIÈRE AMOVIBLE SUR UN ENTRAÎNEUR**
ELEKTRISCHE LEBENSMITTELZUBEREITUNGSVORRICHTUNG MIT EINEM ARBEITSWERKZEUG ZUR VORÜBERGEHENDEN VERBINDUNG MIT EINEM ANTRIEBSMECHANISMUS
ELECTRICAL FOOD PREPARATION DEVICE COMPRISING A WORKING TOOL THAT REMOVABLY ENGAGES ON A DRIVE MECHANISM

(30) Priorité: 29.08.2013 FR 1358286
(43) Date de publication de la demande: 06.07.2016
(73) Titulaire: SEB S.A., 69130 Ecully (FR)
(72) Inventeur: GIRAUD, Jean-Baptiste, F-53240 Saint Jean sur Mayenne (FR); BEAUDET, Jean-Yves, F-53110 Saint Julien du Terroux (FR); NESPOUX,Johan, F-53000 Laval (FR)
(74) Mandataire: Bourrières, Patrice
(86) Numéro de dépôt international: PCT/FR2014/052111
(87) Numéro de publication internationale: WO 2015/028748

(56) Documents cités:
- EP-A1- 2 433 534
- CN-U- 202 665 185
- DE-A1-102010 026 963
- FR-A1- 2 286 632

## Description

La présente invention se rapporte au domaine technique général des appareils électroménagers de préparation culinaire comportant un entraineur entrainé en rotation par un moteur et un outil de travail muni d'une douille venant s'engager de manière amovible sur l'entraineur, l'entraineur comportant un tronçon muni d'au moins une rampe d'entrainement qui coopère avec une rampe d'entrainement complémentaire portée par la douille pour assurer l'entrainement en rotation de l'outil de travail.

Il est connu, des demandes de brevet FR 2 286 632, WO2010/133431 et CN202665185U, un appareil de préparation culinaire comprenant un récipient de travail comportant un fond muni d'un entraineur sur lequel vient s'engager de manière amovible un outil de travail, l'entraineur possédant des rampes d'entrainement présentant une inclinaison adaptée pour que la rotation de l'entraineur dans le sens de rotation du moteur génère un effort sur la douille tendant à la maintenir engagée sur l'entraineur, évitant ainsi que l'outil ne se soulève lorsqu'il agit sur les ingrédients présents dans le récipient. Dans les appareils divulgués par les demandes de brevet FR 2 286 632, WO2010/133431, l'entraineur comporte également des surfaces de retenue qui viennent au contact de butées portées par la douille lors de la rotation de l'entraineur en sens inverse pour éviter que la douille ne remonte le long de l'entraineur lors d'un arrêt brutal du moteur.

Un appareil muni d'un tel dispositif d'accouplement présente l'avantage d'éviter que l'outil de travail ne se désengage de l'entraineur lorsque le moteur est arrêté brutalement par l'action d'un dispositif de sécurité, une telle interruption brutale se produisant notamment lorsque l'appareil est muni d'un dispositif de sécurité couvercle et que l'utilisateur ouvre le couvercle du récipient alors que l'appareil est en fonctionnement.

Toutefois, un tel dispositif d'accouplement présente l'inconvénient de mettre en oeuvre un entraineur et une douille possédant des formes complexes qui les rendent difficiles et coûteux à réaliser.

Aussi, un but de la présente invention est de proposer un appareil électroménager de préparation culinaire comportant un outil de travail engagé de manière amovible sur un entraineur au moyen d'un dispositif d'accouplement remédiant à ces inconvénients.

A cet effet, l'invention se rapporte à un appareil électroménager de préparation culinaire comportant un entraineur entrainé en rotation par un moteur et un outil de travail comportant une douille venant s'engager de manière amovible sur l'entraineur, l'entraineur comportant un tronçon muni d'au moins une rampe d'entrainement qui coopère avec une rampe d'entrainement complémentaire, portée par la douille, pour assurer l'entrainement en rotation de l'outil de travail, la rampe d'entrainement présentant une inclinaison adaptée pour que la rotation de l'entraineur dans le sens de rotation du moteur génère un effort sur la douille tendant à la maintenir engagée sur l'entraineur, l'entraineur comportant également au moins une surface de retenue qui vient au contact d'une butée portée par l'outil de travail lors de la rotation de l'entraineur en sens inverse, la surface de retenue et la butée présentant des formes qui coopèrent entre elles pour éviter que la douille ne remonte le long de l'entraineur lors de l'arrêt brutal du moteur, caractérisé en ce que la surface de retenue est ménagée sur une partie de l'entraineur distincte du tronçon supportant la rampe d'entrainement.

Par tronçon, on entend une partie de l'entraineur s'étendant entre deux plans perpendiculaires à l'axe de rotation de l'entraineur.

Un tel appareil présente l'avantage de posséder un entraineur comprenant des surfaces de retenue disposées sur une partie de l'entraineur qui est décalée axialement par rapport au tronçon recevant les rampes d'entrainement, permettant ainsi une plus grande facilité de réalisation de l'entraineur et/ou une plus grande liberté pour la réalisation des formes des surfaces de retenue et des rampes d'entrainement.

Selon une autre caractéristique de l'invention, la ou les surfaces de retenue sont disposées à une plus grande distance radiale de l'axe longitudinal de l'entraineur que la ou les rampes d'entrainement.

Une telle caractéristique permet d'exercer un effort moins important sur les surfaces de retenue pour un couple de blocage donné, permettant ainsi d'avoir des surfaces de retenue plus petites.

Selon une autre caractéristique de l'invention, la surface de retenue s'étend parallèlement à l'axe de l'entraineur ou est inclinée vers le bas.

Par inclinée vers le bas, on entend que la surface de retenue est inclinée vers le côté opposé au sommet de l'entraineur par lequel l'outil de travail est engagé sur l'entraineur.

Une telle surface de retenue présente l'avantage d'être simple à réaliser et de présenter une forme évitant la remontée de l'outil de travail sur l'entraineur lorsque la butée vient heurter la surface de retenue.

Selon une autre caractéristique de l'invention, la ou les surfaces de retenue sont portées par un disque disposé à la base de l'entraineur.

Une telle caractéristique présente l'avantage d'offrir une surface distincte du tronçon supportant la rampe d'entrainement qui est simple à réaliser.

Selon une autre caractéristique de l'invention, le disque présente un plus grand diamètre que le diamètre de l'entraineur au niveau du tronçon supportant la ou les rampes d'entrainement.

Selon encore une autre caractéristique de l'invention, la ou les surfaces de retenue s'étendent sensiblement radialement à l'entraineur et le disque comporte, entre deux surfaces de retenue successives, un bord périphérique s'étendant en spirale.

Selon encore une autre caractéristique de l'invention, la ou les rampes d'entrainement présentent une forme hélicoïdale.

Selon une autre caractéristique de l'invention, l'entraineur comporte trois rampes d'entrainement réparties à 120° les unes des autres.

Selon une autre caractéristique de l'invention, l'entraineur comporte trois surfaces de retenue réparties à 120° les unes des autres.

Selon une autre caractéristique de l'invention, l'entraineur est disposé dans le fond d'un récipient de travail.

Selon une autre caractéristique de l'invention, l'appareil comporte un dispositif de sécurité pouvant arrêter brutalement la rotation de l'entraineur.

Selon une autre caractéristique de l'invention, le récipient de travail est fermé par un couvercle et le dispositif de sécurité arrête le moteur à l'ouverture du couvercle.

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
- la figure 1 est une vue en perspective éclatée d'un appareil de préparation culinaire selon un mode particulier de réalisation de l'invention, la vue représentant également plusieurs types d'outils de travail pouvant être utilisés dans cet appareil ;
- les figures 2A, 2B et 2C sont respectivement des vues en perspective, de dessus, et de côté de l'entraineur équipant le fond du récipient de l'appareil de la figure 1 ;
- les figures 3A et 3B sont respectivement des vues en perspective et en coupe longitudinale d'un outil coupant équipant l'appareil de la figure 1;
- la figure 4 est une vue de côté de l'outil coupant de la figure 3A ;
- les figures 5 et 6 sont respectivement des vues en perspective de l'outil coupant lorsque l'entraineur est engagé dans la douille, dans une position d'entrainement en rotation de l'outil coupant et dans une position de freinage brutal de l'entraineur ;
- les figures 7 et 8 sont des vues en coupe de l'outil coupant selon la ligne VII-VII de la figure 4 lorsque l'entraineur occupe respectivement les positions illustrées sur les figures 5 et 6.

Seuls les éléments nécessaires à la compréhension de l'invention ont été représentés. Pour faciliter la lecture des dessins, les mêmes éléments portent les mêmes références d'une figure à l'autre.

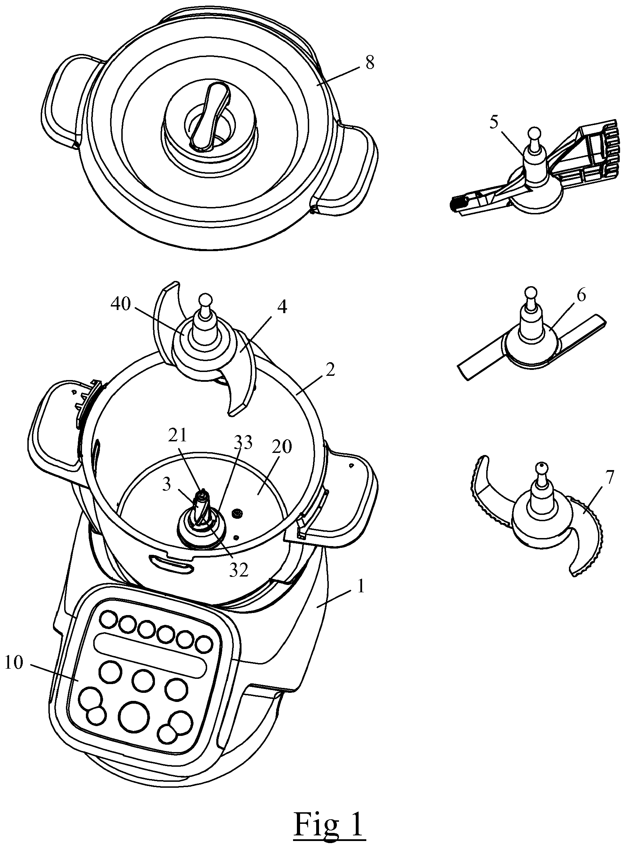

La figure 1 représente un appareil de préparation culinaire comportant un boitier 1 en matière plastique et un récipient de travail 2, avantageusement réalisé en acier inox, qui repose de manière amovible sur le boitier 1.

Le récipient de travail 2 comporte un fond 20 supportant un entraineur 3 entrainé par un moteur, non représenté sur les figures, intégré dans le boitier 1 et l'appareil comporte plusieurs outils de travail 4, 5, 6, 7 pouvant indifféremment être accouplés à l'entraineur 3, chacun des outils de travail 4, 5, 6, 7 comportant un moyeu central commun renfermant une douille adaptée pour s'engager de manière amovible sur l'entraineur 3.

Le récipient de travail 2 comporte une extrémité supérieure fermée par un couvercle 8 amovible et l'appareil est avantageusement muni d'un dispositif de sécurité couvercle, non visible sur les figures, qui interrompt le fonctionnement du moteur lorsque le couvercle 8 n'est pas verrouillé sur le récipient de travail 2.

De manière préférentielle, le boitier 1 est équipé d'une plaque chauffante permettant de chauffer le contenu du récipient de travail 2, la plaque chauffante et le moteur étant pilotés par une carte électronique disposée sous un panneau de commande 10 présent sur une face avant du boitier 1, cette carte électronique recevant la valeur de la température mesurée par un palpeur de température et assurant la régulation de l'alimentation de la résistance de façon à amener le contenu du récipient de travail 2 à une température de consigne.

L'entraineur 3 est supporté par un dispositif d'entrainement comportant un arbre d'entrainement 21 fixé sur le fond 20 du récipient de travail par des moyens de guidage assurant à la fois la libre rotation de l'arbre d'entrainement 21 perpendiculairement au fond du récipient de travail 2 et l'étanchéité de la liaison rotative, l'arbre d'entrainement 21 traversant le fond 20 du récipient de travail et comportant une extrémité supérieure munie de méplats sur laquelle est engagé l'entraineur 3 ainsi qu'une extrémité inférieure venant s'accoupler à un élément solidaire en rotation du moteur lorsque le récipient de travail est correctement placé sur le boitier 1.

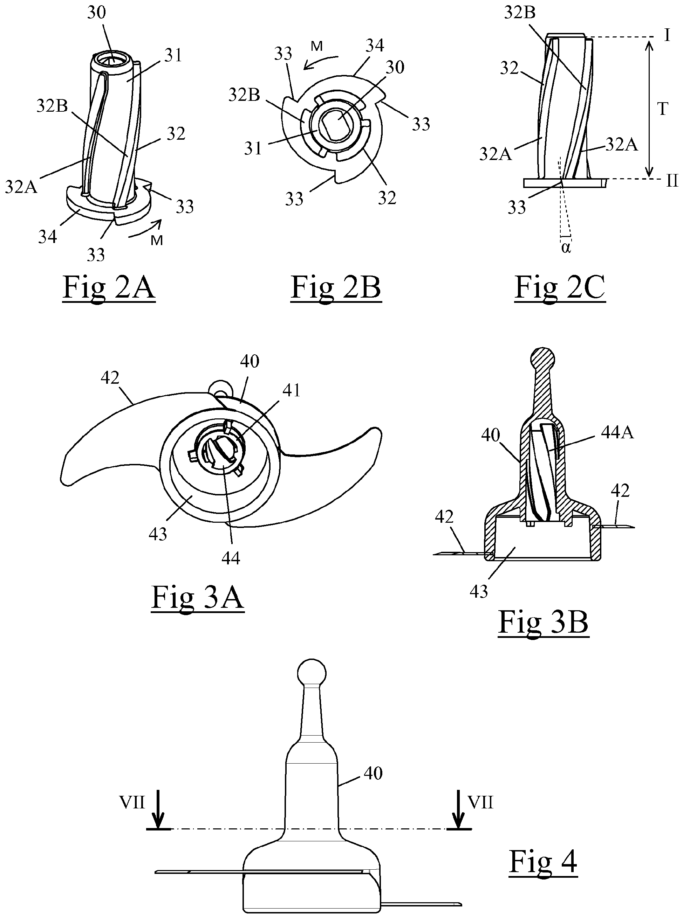

Conformément aux figures 2A, 2B et 2C, l'entraineur 3 comporte un tronçon T présentant un corps cylindrique 31 qui s'étend longitudinalement entre deux plans I, Il perpendiculaires à l'axe de rotation de l'entraineur 3, le corps cylindrique 31 comprenant un alésage central 30, muni de méplats, présentant une forme complémentaire à celle de l'extrémité supérieure de l'arbre d'entrainement 21 et comportant une surface externe supportant trois nervures 32 hélicoïdales, réparties à 120° les unes des autres.

Les figures 3A et 3B illustrent plus en détails l'un des outils de travail 4, 5, 6, 7 équipant l'appareil de préparation culinaire de la figure 1, cet outil de travail étant constitué par un outil coupant 4 permettant de hacher les aliments disposés dans le fond du récipient de travail 2 et comportant un moyeu central 40 en matériau plastique avantageusement surmoulé sur deux lames 42 courbes en acier inox, disposées à 180° l'une de l'autre.

Conformément à ces figures, l'outil coupant 4 comporte une douille 41 qui est intégrée dans le moyeu central 40 et comporte une extrémité inférieure ouverte qui débouche dans une cavité 43 disposée à la base du moyeu central 40, cette cavité 43 étant ouverte à son extrémité inférieure. La douille 41 comporte un alésage interne recevant trois rainures 44 hélicoïdales, réparties à 120° les unes des autres, adaptées pour recevoir les nervures 32 de l'entraineur, les rainures 44 présentant une plus grande largeur que la largeur des nervures 32 de manière à ce que les nervures 32 hélicoïdales de l'entraineur 3 puissent s'engager sans difficulté au travers des rainures 44 de la douille lors de la mise en place de l'outil coupant 4 sur l'entraineur 3.

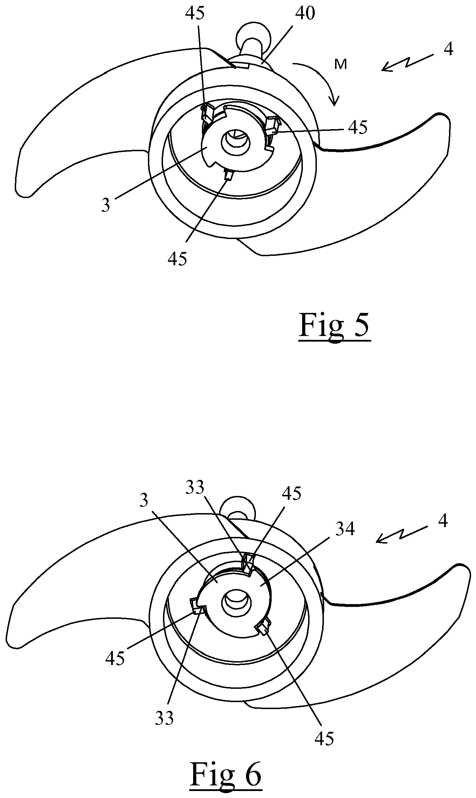

Dans le dispositif d'accouplement ainsi réalisé, lorsque l'entraineur 3 est entrainé en rotation dans le sens moteur M illustré sur les figures 2B et 5, le bord tourné vers le bas des nervures 32 de l'entraineur forme une rampe d'entrainement 32A hélicoïdale qui vient prendre appui sur une rampe d'entrainement complémentaire 44A du moyeu central 40 constituée par le bord tourné vers le haut de la rainure 44.

Plus particulièrement selon l'invention, l'entraineur 3 comporte des surfaces de retenue 33 qui coopèrent avec des butées 45 portées par l'outil coupant 4 pour stopper la rotation de l'entraineur 3 au travers de la douille 41, dans le sens inverse du sens moteur M, avant que le bord 32B de la nervure hélicoïdale opposé à la rampe d'entrainement 32A ne vienne au contact du bord 44B de la rainure opposé à la rampe d'entrainement complémentaire 44A afin d'éviter la remontée de l'outil coupant 4 sur l'entraineur 3 lors d'un arrêt brutal de l'entraineur 3.

Comme on peut le voir sur les figures 2A et 2B, les surfaces de retenue 33 sont portées par une partie de l'entraineur 3 distincte du tronçon T comportant les rampes d'entrainement 32A, cette partie étant préférentiellement constituée par un disque 34 disposé sous le corps cylindrique 31.

Le disque 34 présente un plus grand diamètre que le diamètre de l'entraineur 3 au niveau du tronçon T et comprend trois surfaces de retenue 33 ménagées à 120° les unes des autres, le disque comprenant, entre chaque surface de retenue 33, un bord périphérique en forme de spirale qui relie le bord externe de la surface de retenue 33 située en amont au bord interne de la surface de retenue 33 située en aval.

De manière préférentielle, les surfaces de retenue 33 s'étendent radialement à l'entraineur, dans un plan passant par l'axe de rotation de l'entraineur 3, ou sont inclinées de quelques degrés vers les bas de manière à faciliter le démoulage de l'entraineur. L'inclinaison des surfaces de retenue, par exemple d'un angle α de l'ordre de 5 à 20° par rapport au plan vertical, peut également permettre de générer un effort de maintien de l'outil coupant 4 dans le fond du récipient de travail lorsque les butées 45 viennent heurter les surfaces de retenue 33 si les butées 45 présentent une forme adaptée pour coopérer avec cette surface inclinée.

Dans l'exemple illustré sur les figures 3A et 3B, les butées 45 portées par l'outil coupant 4 sont constituées par trois plots de section rectangulaire disposés à 120°C les unes des autres, dans le prolongement de l'extrémité inférieure de la douille 41, ces butées 45 s'étendant axialement à la périphérie de la douille 41 et faisant saillie à l'intérieur de la cavité 43 du moyeu central 40 sur une hauteur adaptée pour venir prendre appui sur les surfaces de retenue 33 situées à la base de l'entraineur 3 lorsque l'outil coupant 4 tourne dans le sens moteur M par rapport à l'entraineur 3.

Le fonctionnement de l'appareil va maintenant être décrit en relation avec les figures 5 à 8.

Lorsque l'utilisateur souhaite réaliser une préparation à l'aide de l'appareil, il engage l'outil coupant 4, ou l'un des autres outils de travail 5, 6, 7 disponibles, sur l'entraineur 3, verse les ingrédients nécessaires à la préparation dans le fond du récipient de travail 2, verrouille le couvercle 8 sur le sommet du récipient de travail 2, puis actionne un bouton disposé sur le panneau de commande 10 pour commander la mise en marche du moteur.

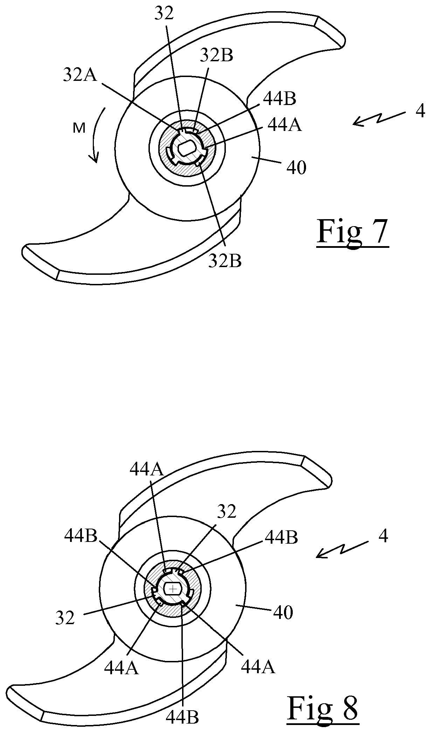

Cette mise en marche du moteur provoque la rotation de l'entraineur 3 selon le sens moteur M, illustré sur la figure 5, de sorte que les rampes d'entrainement 32A de l'entraineur, tournées vers le bas, viennent prendre appui sur les rampes d'entrainement complémentaires 44A de la douille 41, tournées vers le haut, ainsi que cela est illustré sur la figure 7, la force d'entrainement appliquée sur la douille 41 comprenant une composante verticale orientée vers le bas qui tend à maintenir l'outil coupant 4 dans le fond du récipient de travail 2.

Dans le cas d'un freinage brutal de l'entraineur 3, lié par exemple à l'action du dispositif de sécurité à l'ouverture du couvercle 8, l'outil coupant 4 poursuit sa rotation dans le sens moteur M, sous l'effet de son inertie et de l'éventuel inertie des ingrédients entrainés en rotation dans le fond du récipient, ce qui provoque une rotation relative de l'entraineur 3 par rapport à l'outil coupant 4 dans le sens inverse du sens moteur M. Cette rotation relative de l'outil coupant 4 sur l'entraineur 3 s'effectue jusqu'à ce que les surfaces de retenue 33 de l'entraineur 3 viennent au contact des butées 45 portées par l'outil coupant 4, ainsi que cela est illustré sur la figure 6, cette mise en contact provoquant l'arrêt brutal de l'outil coupant 4 sur l'entraineur 3 empêchant ainsi que le bord 32B des nervures 32 hélicoïdales opposé à la rampe d'entrainement 32A ne vienne au contact du bord 44B des rainures 44 opposé à la rampe d'entrainement complémentaire 44A. Lors de cet arrêt, l'orientation des surfaces de retenue 33 selon un plan vertical ou légèrement incliné vers le bas permet d'éviter le soulèvement de l'outil coupant 4 par rapport à l'entraineur 3.

Bien entendu, le fonctionnement de l'appareil et les avantages du dispositif d'accouplement ainsi réalisé restent les mêmes quel que soit l'outil de travail 4, 5, 6, 7 utilisé, ces derniers comportant une douille et des butées en tout point similaire à celles décrites pour l'outil coupant 4.

L'appareil ainsi réalisé présente donc l'avantage de comporter un dispositif d'accouplement de l'outil de travail qui garantit un excellent maintien de l'outil de travail dans le fond du récipient lors du fonctionnement de l'appareil ou lors d'un arrêt brutal de l'entraineur.

De plus, l'appareil ainsi réalisé présente l'avantage de comporter un dispositif d'accouplement de l'outil de travail qui est facile et économique à fabriquer, notamment par moulage, grâce à la disposition dans deux zones longitudinales distinctes des formes assurant l'entrainement de l'outil de travail dans le sens moteur et des formes assurant l'arrêt en rotation de l'outil de travail.

Ainsi, dans une variante de réalisation non représentée, l'entraineur pourra comporter seulement deux nervures ou bien davantage de nervures réparties sur la périphérie de l'entraineur.

## Revendications

1. Appareil électroménager de préparation culinaire comportant un entraineur (3) entrainé en rotation par un moteur et un outil de travail (4, 5, 6, 7) comportant une douille (41) venant s'engager de manière amovible sur l'entraineur (3), l'entraineur (3) comportant un tronçon (T) muni d'au moins une rampe d'entrainement (32A) qui coopère avec une rampe d'entrainement complémentaire (44A) portée par la douille (41) pour assurer l'entrainement en rotation de l'outil de travail (4, 5, 6, 7), la rampe d'entrainement (32A) présentant une inclinaison adaptée pour que la rotation de l'entraineur (3) dans le sens de rotation du moteur génère un effort sur la douille (41) tendant à la maintenir engagée sur l'entraineur (3), l'entraineur (3) comportant également au moins une surface de retenue (33) qui vient au contact d'une butée (45) portée par l'outil de travail (4, 5, 6, 7) lors de la rotation de l'entraineur (3) en sens inverse, la surface de retenue (33) et la butée (45) présentant des formes qui coopèrent entre elles pour éviter que la douille (41) ne remonte le long de l'entraineur (3) lors de l'arrêt brutal du moteur, **caractérisé en ce que** la surface de retenue (33) est ménagée sur une partie de l'entraineur (3) distincte du tronçon (T) supportant la rampe d'entrainement (32A).

2. Appareil électroménager de préparation culinaire selon la revendication 1, **caractérisé en ce que** la ou les surfaces de retenue (33) sont disposées à une plus grande distance radiale de l'axe longitudinal de l'entraineur (3) que la ou les rampes d'entrainement (32A).

3. Appareil électroménager de préparation culinaire selon l'une quelconque des revendications 1 à 2, **caractérisé en ce que** la surface de retenue (33) s'étend parallèlement à l'axe de l'entraineur (3) ou est inclinée vers le bas.

4. Appareil électroménager de préparation culinaire selon l'une quelconque des revendications 1 à 3, **caractérisé en ce que** la ou les surfaces de retenue (33) sont portées par un disque (34) disposé à la base de l'entraineur (3).

5. Appareil électroménager de préparation culinaire selon la revendication 4, **caractérisé en ce que** le disque (34) présente un plus grand diamètre que le diamètre de l'entraineur (3) au niveau du tronçon (T) supportant la ou les rampes d'entrainement (32A).

6. Appareil électroménager de préparation culinaire selon la revendication 5, **caractérisé en ce que** la ou les surfaces de retenue (33) s'étendent sensiblement radialement à l'entraineur (3) et **en ce que** le disque (34) comporte, entre deux surfaces de retenue (33) successives, un bord périphérique s'étendant en spirale.

7. Appareil électroménager de préparation culinaire selon l'une quelconque des revendications 1 à 6, **caractérisé en ce que** la ou les rampes d'entrainement (32A) présentent une forme hélicoïdale.

8. Appareil électroménager de préparation culinaire selon l'une quelconque des revendications 1 à 7, **caractérisé en ce que** l'entraineur (3) comporte trois rampes d'entrainement (32A) réparties à 120° les unes des autres.

9. Appareil électroménager de préparation culinaire selon l'une quelconque des revendications 1 à 8, **caractérisé en ce que** l'entraineur (3) comporte trois surfaces de retenue (33) réparties à 120° les unes des autres.

10. Appareil électroménager de préparation culinaire selon l'une quelconque des revendications 1 à 9, **caractérisé en ce que** l'entraineur (3) est disposé dans le fond d'un récipient de travail (2).

11. Appareil électroménager de préparation culinaire selon la revendication 1 à 10, **caractérisé en ce qu'**il comporte un dispositif de sécurité pouvant arrêter brutalement la rotation de l'entraineur (3).

12. Appareil électroménager de préparation culinaire selon la revendication 11, **caractérisé en ce que** le récipient de travail est fermé par un couvercle (8) et **en ce que** le dispositif de sécurité arrête le moteur à l'ouverture du couvercle.

## Patentansprüche

1. Elektrisches Haushaltsgerät zur Lebensmittelzubereitung, aufweisend einen Antreiber (3), der von einem Motor in Drehung versetzt wird, und ein Arbeitswerkzeug (4, 5, 6, 7), das eine Buchse (41) aufweist, die lösbar in den Antreiber (3) eingreift, wobei der Antreiber (3) einen Abschnitt (T) aufweist, der mit mindestens einer Antriebsrampe (32A) versehen ist, die mit einer komplementären Antriebsrampe (44A) zusammenarbeitet, die von der Buchse (41) getragen wird, um das Antreiben in Drehung des Arbeitswerkzeugs (4, 5, 6, 7) sicherzustellen, wobei die Antriebsrampe (32A) eine Neigung aufweist, die so angepasst ist, dass die Drehung des Antriebs (3) in der Drehrichtung des Motors eine Kraft auf die Buchse (41) erzeugt, die dazu neigt, sie am Antreiber (3) in Eingriff zu halten, wobei der Antreiber (3) auch mindestens eine Rückhaltefläche (33) aufweist, die mit einem Anschlag (45) in Kontakt kommt, der von dem Arbeitswerkzeug (4, 5, 6, 7) während der Drehung des Antreibers (3) in entgegengesetzter Richtung getragen wird, wobei die Rückhaltefläche (33) und der Anschlag (45) Formen aufweisen, die miteinander zusammenwirken, um zu verhindern, dass die Buchse (41) entlang des Antreibers (3) während des abrupten Anhaltens des Motors hochläuft, **dadurch gekennzeichnet, dass** die Rückhaltefläche (33) an einem Teil des Antreibers (3) vorgesehen ist, der von dem die Antriebsrampe (32A) tragenden Abschnitt (T) getrennt ist.

2. Elektrisches Haushaltsgerät zur Lebensmittelzubereitung nach Anspruch 1, **dadurch gekennzeichnet, dass** die Rückhaltefläche(n) (33) in einem größeren radialen Abstand von der Längsachse des Antreibers (3) als die Antriebsrampe(n) (32A) angeordnet sind bzw. ist.

3. Elektrisches Haushaltsgerät zur Lebensmittelzubereitung nach einem der Ansprüche 1 bis 2, **dadurch gekennzeichnet, dass** sich die Rückhaltefläche (33) parallel zur Achse des Antreibers (3) erstreckt oder nach unten geneigt ist.

4. Elektrisches Haushaltsgerät zur Lebensmittelzubereitung nach einem der Ansprüche 1 bis 3, **dadurch gekennzeichnet, dass** die Rückhaltefläche(n) (33) von einer Scheibe (34) getragen werden bzw. wird, die an der Basis des Antreibers (3) angeordnet ist.

5. Elektrisches Haushaltsgerät zur Lebensmittelzubereitung nach Anspruch 4, **dadurch gekennzeichnet, dass** die Scheibe (34) einen größeren Durchmesser als der Durchmesser des Antreibers (3) an dem Abschnitt (T) aufweist, der die Antriebsrampe(n) (32A) trägt.

6. Elektrisches Haushaltsgerät zur Lebensmittelzubereitung nach Anspruch 5, **dadurch gekennzeichnet, dass** die Rückhaltefläche(n) (33) sich im Wesentlichen radial zu dem Antreiber (3) erstrecken bzw. erstreckt, und dass die Scheibe (34) zwischen zwei aufeinanderfolgend Rückhalteflächen (33) eine Umfangskante umfasst, die sich spiralförmig erstreckt.

7. Elektrisches Haushaltsgerät zur Lebensmittelzubereitung nach einem der Ansprüche 1 bis 6, **dadurch gekennzeichnet, dass** die Antriebsrampe(n) (32A) eine Schraubenform aufweisen bzw. aufweist.

8. Elektrisches Haushaltsgerät zur Lebensmittelzubereitung nach einem der Ansprüche 1 bis 7, **dadurch gekennzeichnet, dass** der Antreiber (3) drei um 120° zueinander versetzte Antriebsrampen (32A) aufweist.

9. Elektrisches Haushaltsgerät zur Lebensmittelzubereitung nach einem der Ansprüche 1 bis 8, **dadurch gekennzeichnet, dass** der Antreiber (3) drei um 120° zueinander versetzte Rückhalteflächen (33) aufweist.

10. Elektrisches Haushaltsgerät zur Lebensmittelzubereitung nach einem der Ansprüche 1 bis 9, **dadurch gekennzeichnet, dass** der Antreiber (3) in dem Boden eines Arbeitsbehälters (2) angeordnet ist.

11. Elektrisches Haushaltsgerät zur Lebensmittelzubereitung nach dem Anspruch 1 bis 10, **dadurch gekennzeichnet, dass** es eine Sicherheitsvorrichtung umfasst, die die Drehung des Antreibers (3) abrupt stoppen kann.

12. Elektrisches Haushaltsgerät zur Lebensmittelzubereitung nach Anspruch 11, **dadurch gekennzeichnet, dass** der Arbeitsbehälter durch einen Deckel (8) verschlossen ist, und dass die Sicherheitsvorrichtung den Motor bei der Öffnung des Deckels anhält.

## Claims

1. Electrical food preparation device comprising a drive mechanism (3) rotated by a motor and a working tool (4, 5, 6, 7) comprising a bushing (41) that removably engages on the drive mechanism (3), the drive mechanism (3) comprising a section (T) provided with at least one drive ramp (32A) that cooperates with a complementary drive ramp (44A) carried by the bushing (41) in order to provide the rotation of the working tool (4, 5, 6, 7), the drive ramp (32A) having an inclination designed such that the rotation of the drive mechanism (3) in the direction of rotation of the motor generates a force on the bushing (41) that tends to keep it engaged on the drive mechanism (3), the drive mechanism (3) also comprising at least one retaining surface (33) that comes into contact with a stop (45) carried by the working tool (4, 5, 6, 7) during the rotation of the drive mechanism (3) in the reverse direction, the retaining surface (33) and the stop (45) having shapes that cooperate together in order to prevent the bushing (41) from rising back up along the drive mechanism (3) when the motor stops suddenly, **characterised in that** the retaining surface (33) is provided on a part of the drive mechanism (3) that is separate from the section (T) supporting the drive ramp (32A).

2. Electrical food preparation device according to claim 1, **characterised in that** the retaining surface or surfaces (33) are arranged at a greater radial distance from the longitudinal axis of the drive mechanism (3) than the drive ramp or ramps (32A).

3. Electrical food preparation device according to any of claims 1 to 2, **characterised in that** the retaining surface (33) extends parallel to the axis of the drive mechanism (3) or is inclined downwards.

4. Electrical food preparation device according to any of claims 1 to 3, **characterised in that** the retaining surface or surfaces (33) are carried by a disc (34) arranged at the base of the drive mechanism (3).

5. Electrical food preparation device according to claim 4, **characterised in that** the disc (34) has a larger diameter than the diameter of the drive mechanism (3) on section (T) supporting the drive ramp or ramps (32A).

6. Electrical food preparation device according to claim 5, **characterised in that** the retaining surface or surfaces (33) extend substantially radially to the drive mechanism (3) and **in that** the disc (34) comprises, between two successive retaining surfaces (33), a peripheral edge extending in a spiral.

7. Electrical food preparation device according to any of claims 1 to 6, **characterised in that** the drive ramp or ramps (32A) have a helical shape.

8. Electrical food preparation device according to any of claims 1 to 7, **characterised in that** the drive mechanism (3) comprises three drive ramps (32A) distributed 120° from one another.

9. Electrical food preparation device according to any of claims 1 to 8, **characterised in that** the drive mechanism (3) comprises three retaining surfaces (33) distributed 120° from one another.

10. Electrical food preparation device according to any of claims 1 to 9, **characterised in that** the drive mechanism (3) is arranged in the bottom of a working container (2).

11. Electrical food preparation device according to claim 1 to 10, **characterised in that** it comprises a safety device that can suddenly stop the rotation of the drive mechanism (3).

12. Electrical food preparation device according to claim 11, **characterised in that** the working container is closed by a lid (8) and **in that** the safety device stops the motor when the lid is opened.
